(19) Europäisches Patentamt
European Patent Office
Office européen des brevets

(11) Publication number: **0 174 383**
**B1**

# (12) EUROPEAN PATENT SPECIFICATION

(45) Date of publication of patent specification: **09.08.89**

(51) Int. Cl.[4]: **G 11 B 7/24**, C 09 B 23/08

(21) Application number: **84110819.4**

(22) Date of filing: **11.09.84**

ERRATUM

| DIE TEXTSTELLE: TEXT PUBLISHED: LE PASSAGE SUIVANT: | (SEITE, SPALTE, ZEILE) (PAGE, COLUMN, LINE) (PAGE, COLONNE, LIGNE) | | | LAUTET BERICHTIGT: SHOULD READ: DEVRAIT ETRE LU: |
|---|---|---|---|---|
| C represents halogen, and | 9 | | 20 | X represents halogen, and |

Tag der Entscheidung über die Berichtigung / Date of decision on rectification / Date de décision portant ...: 9.11.89

Ausgabe- und Veröffentlichungstag / Issue and publication date / Date d'edition et de publication: 7.2.90

Patbl.Nr / EPB no / Bull. no: 90/06

(19) Europäisches Patentamt
European Patent Office
Office européen des brevets

(11) Publication number: 0 174 383 B1

(12) **EUROPEAN PATENT SPECIFICATION**

(45) Date of publication of patent specification: **09.08.89**

(51) Int. Cl.$^4$: **G 11 B 7/24,** C 09 B 23/08

(21) Application number: **84110819.4**

(22) Date of filing: **11.09.84**

(54) **Optical information recording medium.**

(43) Date of publication of application:
**19.03.86 Bulletin 86/12**

(45) Publication of the grant of the patent:
**09.08.89 Bulletin 89/32**

(84) Designated Contracting States:
**DE FR GB NL**

(56) References cited:
**DE-A-2 543 092**
**DE-C- 499 967**
**US-A-4 219 826**
**PATENT ABSTRACTS OF JAPAN, vol. 8, no. 195, 7 Sep 1984, p. (M-323) (1632); & JP-A-59-83695 (TDK K.K.) 15-05-1984**
**PATENT ABSTRACTS OF JAPAN, vol. 8, no. 174, 10 Aug 1984, p. (M-316) (1611) & JP-A-59-83695 (TDK K.K.) 15-05-1984**
**PATENT ABSTRACTS OF JAPAN, vol. 8, no. 12, 19 Jan 1984, p. (M-269) (1449); & JP-A-58-175693 (RICOH K.K.) 14-10-1983**
**The file contains technical information submitted after the application was filed and not included in this specification**

(73) Proprietor: **Ricoh Company, Ltd**
**3-6, 1-chome Nakamagome**
**Ota-ku Tokyo 143 (JP)**

(72) Inventor: **Oba, Hideaki**
**No. 211-11, Kamoi-cho, Midori-ku**
**Yokohama-shi, Kanagawa-ken (JP)**
Inventor: **Abe, Michiharu**
**No. 481, Akiba-cho, Totsuka-ku**
**Yokohama-shi, Kanagawa-ken (JP)**
Inventor: **Umehara, Masaakira**
**No. 3-2, Susukino 3-chome, Midori-ku**
**Yokohama-shi, Kanagawa-ken (JP)**

(74) Representative: **Dipl.-Ing. Schwabe, Dr. Dr. Sandmair, Dr. Marx**
**Stuntzstrasse 16 Postfach 86 02 45**
**D-8000 München 86 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 174 383 B1

**Description**

Background of the Invention

a) Field of the Invention

The present invention relates to a recording medium, in particular relates to an optical information recording medium for use in writing (recording) and reading (regenerating) with a high density energy beam.

b) Description of the Prior Art

A great number of optical information recording mediums for use in writing and reading with a high density energy beam have hitherto been proposed.

As one typical recording medium of such recording mediums, there is enumerated the one which has applied a coloring thin film to the recording layer. The optical memory medium of this type is constructed so that the metal reflective film is formed on the substrate and the coloring thin film recording layer is further formed thereon. When recording information and regenerating it using the medium of this type, it may be done by condensing a laser beam, to which wavelength the recording layer exhibits a maximum rate of light absorption, and radiating such a laser beam from the side of the recording layer of the medium.

Hereupon, said metal reflective film is provided for the purpose of supplementing the deficient amount of the beam reflected form the coloring layer alone. However, the presence of the metal reflective film is defective in that due to this, the structure of the information recording medium becomes complicated and simultaneously the production cost become high.

In view of this, an optical information recording medium is attracting public attention recently, wherein a high-reflective and bronze-lustered organic coloring matter-containing layer is provided directly on the substrate and the metal reflective film is omitted. In particular, when using, as a recording layer, a highly light absorptive cyanine coloring matter and making said recording film have a thickness of 300Å—600Å, there can be obtained a light absorption reflective film which exhibits metal luster (reflective index: 20—30%) and permits to effect recording with laser beam and reflective reading with laser beam.

However, the fact is that the cyanine coloring matter-containing recording mediums proposed up to now still involves the following drawbacks: (i) As it is difficult to protect the coloring matter-containing recording layer, information recording or regeneration is likely to be mistaken due to fine dust and the like adhered to the recording layer, (ii) Recording or regenerating sensitivity is not satisfactory, (iii) Preservability can not be kept constant for a long time, and the like.

From JP—A—59—67092 an optical recording medium is known, containing a cyanine coloring matter of certain structure.

JP—A—59—83695 refers to an optical recording medium, the recording layer of which comprises (A) a coloring matter, which is preferably a carbon cyanine coloring matter, and (B) two or more singlet oxygen quenchers, preferably chela compounds of a transition metal.

Summary of the Invention

The present invention has been accomplished in the light of the above mentioned problems. The first object of the present invention is to provide an optical information recording medium which is high in both the sensitivity (recording sensitivity and regenerating sensitivity) and the S/N. The second object is to provide an optical information recording medium which is uniform in quality and further superior in preservability (in particular, thermal resistance and light resistance).

The inventors of this application have carried out various studies and investigations in order to achieve the above objects to find that a compound having a specific structure (a specific cyanine coloring matter) is extraordinally superior in thermal resistance and light resistance among cyanine coloring matters and so is useful for the recording layer. The inventors of this application have carried out further studies and investigations to find that the coexistence of a specific transition metal complex with the above mentioned cyanine coloring matter more improves the stability of the resulting optical information recording medium and furthermore there is no inconvenience to be caused by the coexistence of said transition metal complex.

The present invention has been completed on the bases of this finding.

That is, the present invention relates to an optical information recording medium having improved recording and regenerating sensitivity and preservability which comprises a transparent or opaque substrate and a thin film recording layer, formed on said substrate, said recording layer containing a cyanine-coloring matter, characterized in that the cyanine-coloring matter is represented by the following formula (I)

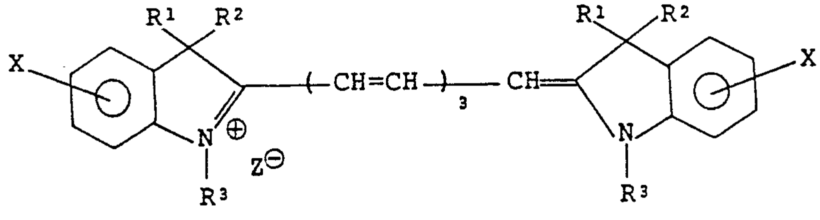

... (I)

wherein $R^1$ and $R^2$ may be the same or different and each represents an alkyl group having 1—6 carbon atoms, $R^3$ represents an alkyl group having 1—3 carbon atoms, X represents halogen, and Z represents a perhalogenate ion, a paratoluene sulfonic ion or an alkyl sulfuric ion and that the thickness of said recording layer is within 0.01—0.1 µm.

Preferred embodiments of this recording medium are subject matter of claims 2 to 8.

It is particularly profitable to use 1-methyl-2-[7-(1-methyl-3,3-dimethyl-5-halo-2-indolinylidene)-1,3,5-heptatrienyl)-3,3-dimethyl-5-halo-indoliumperchlorate represented by the under mentioned general formula II from among the cyanine coloring matters represented by the above mentioned general formula I.

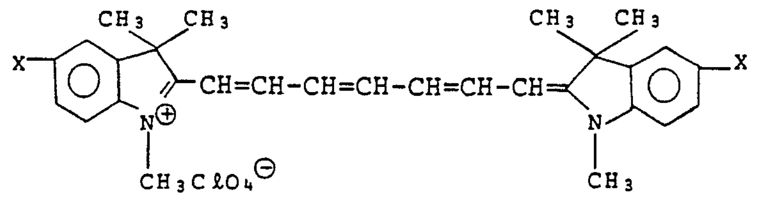

... (II)

(wherein, X stands for a halogen atom selected from the group consisting of fluorine, chlorine, bromine and iodine.) The optical information recording medium according to the present invention is basically consisted of the substrate and the colouring matter thin film (recording layer). Accordingly, the present invention permits the provision of a protective layer on the recording layer, and the provision of an adhesive layer (an undercoat layer) between the recording layer and the substrate respectively as occasion demands. In addition, the present invention permits to adopt the so-called air-sandwich structure wherein a pair of recording mediums, with each recording layer inside, stand face to face through a peripherally provided spacer. The recording layer used for the present invention is suitable to have such a metal-like reflection as the coloring matter displays at a specific light wavelength region, in practice to have a reflection index of 20% or more, particularly 20—40%, against the wavelength of laser beam used in writing and reading. This reflection is different from said metal-like reflection in that the former has a particular color, but is capable of displaying a high reflection index against the wavelength of laser beam used in recording and regenerating, whereby the amount of light for use in information reading can be increased and the S/N of reading signal can be enhanced.

In this connection, it is to be noted that in case said reflection index is less than 20%, the signal strength is weak and the signal is apt to be influenced by noises. On the other hand, in case the reflection index is more than 40% there is a tendency that the absorption light amount decreases and the energy required for recording enlarger.

As described above, it is desirable that the recording layer of the present invention should contain beforehand the specific transition metal complex (namely, the transition metal complex which is more absorbent of the light at the long wavelength range than the coloring matter represented by the above mentioned general formula I).

The transition metal complexes used in the present invention may be those represented by the following structural formula III or their quaternary ammonium salts:

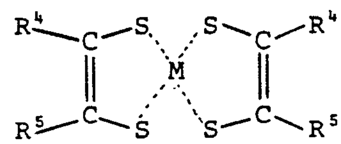

... (III)

(wherein, M is a transition metal selected from the group consisting of nickel, platinum and palladium, $R^4$ and $R^5$ may be the same or different, $R^4$ and $R^5$ each is an alkyl group, a phenyl group, an alkyl-substituted phenyl group, an alkoxy-substituted phenyl group or a dialkylaminophenyl group or $R^4$ and $R^5$ may cooperate to form a ring).

As the transition metal complexes referred to above there can be enumerated bis(4-diethylaminodithiobenzyl)nickel, bis(4-dimethylaminodithiobenzyl)nickel, bis(3,4,5,6-tetrachloro-1,2-dithiophenyl)nickel tetrabutylammonium, bis(4-chloro-1,2-dithiophenyl)nickel tetrabutylammonium, bis(1,4-dimethyl-2,3-dithiophenyl)nickel tetrabutylammonium, bis(1,2-diethiophenyl)nickel tetrabutylammonium, bis(3,4,5,6-tetrachloro-1,2-dithiophenyl)platinum tetrabutylammonium, bis(1,4-dimethyl-2,3-dithiophenyl)palladium tetrabutylammonium, bis(3,4,6-trichloro-1,2-dithiophenyl)nickel tetra(4-hydroxyl butyl)ammonium, and the like. The bis(4-diethylaminodithiobenzyl)nickel is known to be a substance which is absorbent of light in the vicinity of about wavelength 1000 nm.

The substrate materials used in the present invention may be those well known to the ordinary worker in this art and may be either transparent or opaque to the laser beam used. However, when writing record is effected from the substrate side with laser beam, the substrate material must be transparent to writing laser beam. On the other hand, when writing record is effected from the side opposite to the substrate,

namely from the surface of the recording layer, there is no necessity that the substrate material should be transparent to writing laser beam. However, when reading regeneration is carried out with a transmitted light, the substrate material must be transparent to reading laser beam, while when reading regeneration is carried out with a reflected light, the substrate material may be either transparent or opaque to reading laser beam. Referring to the quality of the substrate material, there may be employed the supports generally used for recording elements made of glass, quartz, ceramics, plastics, paper, plate-like or foil-like metal and the like. Among them, plastics are especially suitable in the points of safety, improved recording sensitivity, flatness, light weight, workability and the like. The typical plastics include vinyl chloride resin, vinyl acetate resin, acrylic resin, methacrylic resin, polyester resin, nitrocellulose, polyethylene resin, polypropylene resin, polyamide resin, polystyrene resin, polycarbonate resin, epoxy resin and the like.

The recording layer according to the present invention can be formed by the steps of: (1) using a cyanine coloring matter as an essential component or (2) using a cyanine coloring matter and a transition metal complex as essential components and adding thereto a binder and other addition agents in case of necessity, and applying, on a substrate, a solution obtained by dissolving the same in an organic solvent.

In the present invention, however, the recording layer formed of the cyanine coloring matter itself (or only the cyanine coloring matter and transition metal complex) has a sufficient reflectivity. When a binder and other addition agents are added to this recording layer, there is a tendency that the reflective index of the recording layer is deteriorated. Therefore, it is desirable that the recording layer should be formed of the cyanine coloring matter alone or only the cyanine coloring matter and transition metal complex. In this instance, there is no positive necessity of providing a reflective layer, too.

The recording layer used in the present invention can be formed by preparing a solution which has dissolved the essential materials, namely the cyanine coloring matter and the transition metal complex, and together with a binder and/or an addition agent in case of necessity, in an organic solvent and by coating the substrate with the resulting solution.

As the organic solvent there can be used such, for instance, as methanol, methylenedichloride, 1,2-dichloroethane and the like. Coating is carried out in a usual manner such as spraying, roller coating, dipping, rotary coating and the like. Of these coating methods, spinning is most preferable.

As said binder, there can be enumerated polyvinyl butyral, cellulose acetate, polyvinyl acetate, acrylic or methacrylic resin, polyester resin, ethylenevinyl acetate copolymer, polyamide resin or the like, but as described above, it is desirable that such binders should not be used.

As the examples of aforesaid other addition agents (optional components) there can be enumerated a plasticizer, a surface active agent, an antistatic agent, a lubricant, a flame retarder, a stabilizer, a dispersing agent, an antioxidant and the like. When incorporating the transition metal complex in the recording layer, the mixing ratio of the cyanine coloring matter to the transition metal complex is properly in the ratio of 100 wt parts of the former (cyanine coloring matter) to 3—60 wt parts of the latter (transition metal complex), preferably 5—30 wt parts.

When the optional components have been incorporated in this recording layer, whilst, the amounts of these optional components should be controlled to be under 70 wt% of the total amount of the recording layer.

The cyanine coloring matter and the transition metal complex each may be used singly but two kinds or more may be used concurrently.

In the formation of the recording layer, however, the keenest attention should be paid to the fact that the transition metal complex used herein should be absorbent of the light in the wavelength longer than the wavelength range of which the cyanine coloring matter used herein is absorbent. If this condition is not satisfied, there will be brought about such a disadvantage that the effect of the stability to light radiation given to the cyanine coloring matter is diminished.

The reason why said effect is brought about is not always clarified, but is considered to consist in that the excited energy of the cyanine coloring matter is received by the transition metal complex and escaped. That is, it may be considered that transfer of said energy is difficult to take place in the transition metal complex which is more absorbent of the short wavelength light than the cyanine coloring matter does.

The thickness of the recording layer is 0.01—0.1 mm, preferably 0.03—0.06 μm, more preferably 0.03—0.05 μm.

The adhesive layer (undercoat layer), as stated above, is provided between the substrate and the recording layer as occasion demands.

Taking the thermal conductivity into consideration, this adhesive layer may be formed using a heat insulating resin material or an inorganic material in a conventional manner such as vapordeposition coating or the like.

As the resins used herein there can be enumerated vinyl chloride resin, vinyl acetate resin, acrylic or methacrylic resin, polyester such as polyethylene terephthalate, celluloses such as nitro-cellulose, polyamide, polycarbonate, epoxy resin, polyimide, polysulfone, and the like. And, as the inorganic compounds used herein there can be enumerated $SiO$, $SiO_2$, $TiO_2$ and the like. The use of polyimide and polysulfone is particularly preferable. The thickness of the adhesive layer is in the range of about 0.05 to 10 μm, preferably in the range of about 0.1 to 0.5 μm.

The protective layer, as stated above, is formed on the recording layer as occasion demands. This layer may be formed by using the usual method of vapor deposition, coating or the like, and its thickness is

suitably in the range of about 0.1 to 10 μm, preferably in the range of about 0.5 to 1.0 μm. The materials used in the formation of the protective layer may be either organic or inorganic as the thin recording layer is protected thereby.

The concrete examples of organic materials are disclosed in Japanese Laid Open Patent Application No 96716/1974 Specification, Japanese Laid Open Patent Application No 59626/1976 Specification, Japanese Laid Open Patent Application No 75525/1976 Specification, Japanese Laid Open Patent Application No 88024/1976 Specification, Japanese Laid Open Patent Application No 134633/1976 Specification and the like. Among them, polystyrene, polyethylene terephthalate and ethylene-vinyl acetate copolymer are used profitably. As the concrete examples of inorganic materials, on the other hand, there may be enumerated $Al_2O_3$, $SiO_2$, SiO, MgO, ZnO, $MgF_2$, $CuF_2$ and the like.

The lasers used in the optical information recording medium according to the present invention include $N_2$, He-Cd, Ar, He-Ne, ruby, semi-conductor, dye lasers. Among them, the semi-conductor laser is suitable especially from the viewpoints of light weight, easiness of handling, compactness and the like.

Accordingly, information recording is affected by condensing a laser light by means of a lens onto the recording layer to thereby form fine pits thereon, while information reading is effected by radiating a weak laser light onto the recording layer and utilizing the difference in reflection percentage between the pit portions and the other portions.

The recording medium according to the present invention, as is evident from Examples referred to afterwards, is of a superior preservability while maintaining the high sensitivity and the high S/N. The reason why the above mentioned effects of the present invention are brought about has not been investigated minutely yet.

At any rate, the specific coloring matters, in particular the compounds represented by the general formula II are especially superior in the points of thermal resistance and light resistance from among cyanine coloring matters. The above mentioned physical properties of the specified cyanine coloring matters are considered to be influenced by the size of the ionic radius of the counter ion and the electron absorption effect of the halogen on the indole ring.

## EXAMPLES

### Examples 1—3

An information recording medium was prepared by dissolving each cyanine coloring matter represented by each structural formula in the following Table-1 in a predetermined solvent, applying this solution onto a predetermined substrate (thickness: 1 mm) so as to have a predetermined thickness by means of a rotary coating machine, and drying.

The light resistance life of each of the thus prepared information recording mediums was expressed by a value obtained when said medium was stored at a place where the amount of radiation light is 1/100 of that in the open air, namely a number of years required until the optical density faded to 50% of the initial value. In the fading test, there was employed the accelerated test method of radiating with tungsten light (54000 lux) under the condition of 35±3°C.

The thermal resistance was measured by acceleration test (120°C), and was expressed in terms of relative thermal deposition ratio. That is, the fading speed of the recording medium measured by acceleration test (120°C) was expressed as the relative value to the fading speed of the recording medium of Example 1 which was estimated at 1.0.

The obtained results were as shown in Table-1.

| | Cyanine coloring matter | Solvent | Coloring matter thin film thickness (mm) | Substrate | Spectral characteristics | | | Light resistance life (year) | Relative thermal decomposition ratio |
|---|---|---|---|---|---|---|---|---|---|
| | | | | | λmax (nm) (Solusion) | Thin film (wavelength 800 nm) | | | |
| | | | | | | Absorption rate (%) | Reflection rate (%) | | |
| Example 1 | 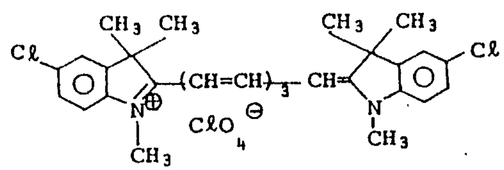 | dichloro ethane | 0.045 | acryl resin | 750 | 56 | 29 | 14 | 1.0 |
| Example 2 | 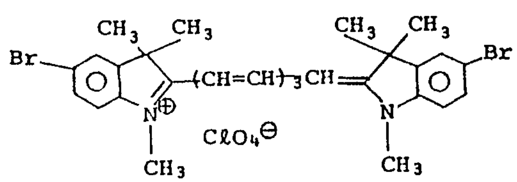 | ethyl alcohol | 0.040 | acryl resin | 750 | 53 | 30 | 13 | 1.15 |
| Example 3 | 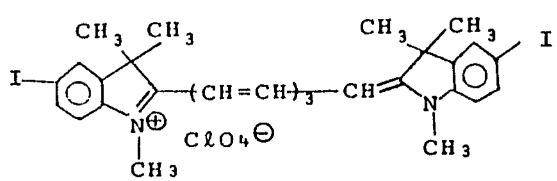 | ethyl alcohol | 0.042 | polycarbonate resin | 750 | 56 | 28 | 13.5 | 1.15 |

Example 4

A dichloroethane solution was prepared which contains 1.25 wt% of the cyanine coloring matter used in Example 1 and 0.05 wt% of bis (4-diethylaminodithiobenzyl, and this solution was applied on a substrate (1 mm-thick acrylic resin plate) by rotary coating to thereby form an about 0.042 μm-thick recording film. Thus, a recording medium was prepared.

Example 5

A dichloroethane solution was prepared which contains 1.25 wt% of the cyanine coloring matter used in Example 2 and 0.10 wt% of bis(3,4,6-trichloro-1,2-dithiophenyl)nickeltetra(4-hydroxybutyl)ammonium. This solution was applied on a substrate (1 mm-thick glass plate) by rotary coating to thereby form an about 0.045 μm-thick recording film. Thus, a recording medium was prepared.

Example 6

A dichloroethane solution was prepared which contains 1.25 wt% of the cyanine coloring matter used in Example 3 and 0.20 wt% of bis(3,4,6-trichloro-1,2-dithiophenyl)nickeltetra(4-hydroxybutyl)ammonium. This solution was applied on a substrate (1 mm-thick acrylic resin plate) by rotary coating to thereby form an about 0.042 μm-thick recording film. Thus, a recording medium was prepared.

These recording mediums obtained in Examples 4, 5 and 6 were subjected to the same tests as done in Examples 1—3. The thus obtained results were obtained as shown in Table-2.

Table 2

| | Spectral characteristics | | | Light resistance life (year) | Relative thermal decomposition ratio |
|---|---|---|---|---|---|
| | λmax (nm) (Solusion) | Thin film (wavelength 800 nm) | | | |
| | | Absorption rate (%) | Reflection rate (%) | | |
| Example 4 | 750 | 53 | 28 | 31 | 1.0 |
| Example 5 | 750 | 57 | 30 | 28 | 1.15 |
| Example 6 | 750 | 56 | 28 | 28 | 1.15 |

**Claims**

1. An optical information recording medium having improved recording and regenerating sensitivity and preservability which comprises a transparent or opaque substrate and a thin film recording layer, formed on said substrate, said recording layer containing a cyanine-coloring matter, characterized in that the cyanine-coloring matter is represented by the following formula I

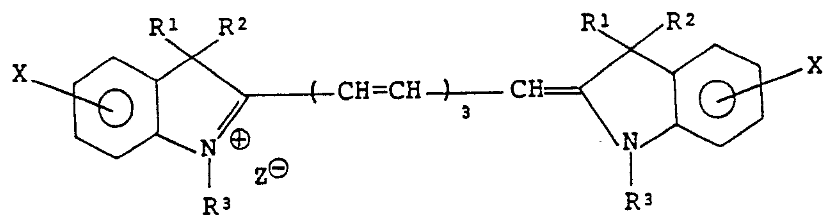

... (I)

wherein $R^1$ and $R^2$ may be the same or different and each represents an alkyl group having 1—6 carbon atoms, $R^3$ represents an alkyl group having 1—3 carbon atoms, C represents halogen, and Z represents a perhalogenate ion, a paratoluene sulfonic ion or an alkyl sulfuric ion and that the thickness of said recording layer is within 0.01—0.1 µm.

2. A recording medium according to Claim 1 wherein said cyanine coloring matter is the special one represented by the following general formula II:

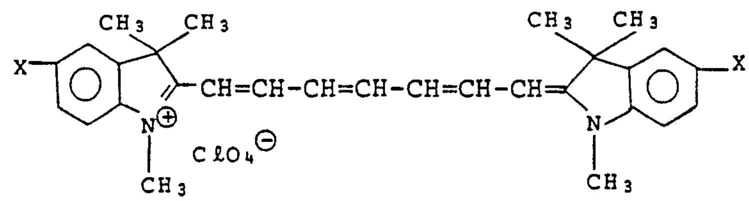

... (II)

(wherein, X stands for one halogen atom selected from the group consisting of fluorine, chlorine, bromine and iodine).

3. A recording medium according to Claim 1 or 2 wherein said cyanine coloring matter-containing thin film further contains a transition metal complex which is more absorbent of long wavelength light than said coloring matter.

4. A recording medium according to Claim 3 wherein said transition metal complex is at least one member of the compounds represented by the following general formula III:

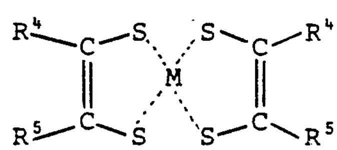

... (III)

(wherein, M is a transition metal selected from nickel, platinum, and palladium, and $R^4$ and $R^5$ may be the same or different and each may stand for an alkyl group, a phenyl group, an alkyl-sbustituted phenyl group, an alkoxy-substituted phenyl group or a dialkyl-aminophenyl group or $R^4$ and $R^5$ may cooperate with each other in forming a ring).

5. A recording medium according to Claim 3 or 4 wherein the mixing ratio of the cyanine coloring matter to the transition metal complex is 100 wt parts (the former): 3—60 wt parts (the latter).

6. A recording medium according to any of the preceding claims wherein said thin film is the one formed by coating.

7. A recording medium according to any of the preceding claims wherein said thin film is 0.03—0.06 µm in thickness.

8. A recording medium according to any of the preceding claims wherein said thin film is 0.03—0.05 µm in thickness.

**Patentansprüche**

1. Optisches Informationsaufzeichnungsmaterial mit verebesserter Aufzeichnungs- und Wiedergabeempfindlichkeit und Haltbarkeit, enthaltend einen transparenten oder opaken Träger und einen dünnen Film als Aufzeichnungsschicht, der auf dem Träger ausgebildet ist, wobei die Aufzeichnungsschicht einen Cyaninfarbstoff enthält, dadurch gekennzeichnet, daß der Cyaninfarbstoff der folgenden allgemeinen Formel I entspricht:

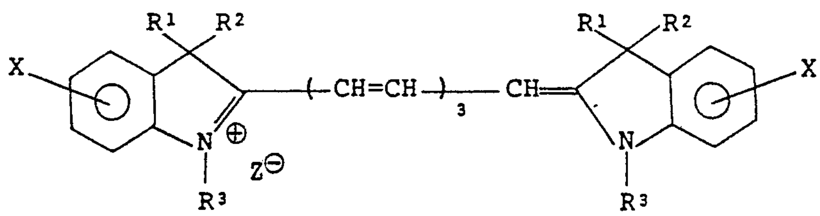
... (I)

worin $R^1$ und $R^2$ gleich oder verschieden sein können und jeder Rest eine Alkylgruppe mit 1 bis 6 Kohlenstoffatomen bedeutet, $R^3$ eine Alkylgruppe mit 1 bis 3 Kohlenstoffatomen bedeutet, X ein Halogenatom bedeutet und Z ein Perhalogenation, Paratoluolsulfonsäureion oder ein Alkylschwefelsäureion bedeutet und daß die Stärke der Aufzeichnungsschicht zwischen 0,01 und 0,1 μm beträgt.

2. Aufzeichnungsmaterial nach Anspruch 1, worin der Cyaninfarbstoff der allgemeinen Formel II entspricht:

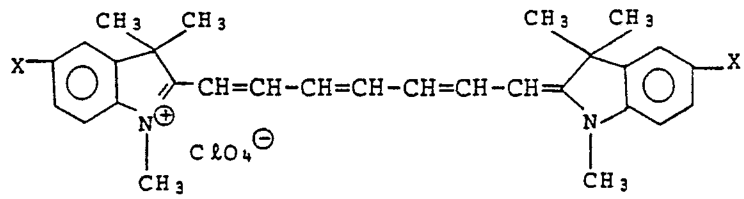
... (II)

(worin X ein Halogen aus der Gruppe Fluor, Chlor, Brom und Iod bedeutet).

3. Aufzeichnungsmaterial nach Anspruch 1 oder 2, worin der Cyaninfarbstoff enthaltende dünne Film weiter einen Übergangsmetallkomplex enthält, der mehr langwelliges Licht absorbiert als der Farbstoff.

4. Aufzeichnungsmaterial nach Anspruch 3, worin der Übergangsmetallkomplex mindestens eine der Verbindungen, dargestellt durch die folgende allgemeine Formel III, ist:

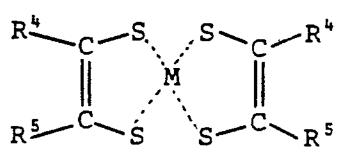
... (III)

(worin M ein Übergangsmetall ausgewählt aus Nickel, Platin und Palladium ist und $R^4$ und $R^5$, die gleich oder verschieden sein können, jeweils eine Alkylgruppe, eine Phenylgruppe, eine alkylsubstituierte Phenylgruppe, eine alkoxysubstituierte Phenylgruppe oder einer Dialkylaminophenylgruppe bedeuten oder $R^4$ und $R^5$ verbinden sich miteinander unter Ringbildung.

5. Aufzeichnungsmaterial nach Anspruch 3 oder 4, worin das Mischungsverhältnis des Cyaninfarbstoffs zum Übergangsmetallkomplex 100 Gewichtsteile (des ersten); 3—60 Gewichtsteile (des letzteren) beträgt.

6. Aufzeichnungsmaterial nach einem der vorhergehenden Ansprüche, worin der dünne Film durch Beschichtung gebildet wird.

7. Aufzeichnungsmaterial nach einem der vorhergehenden Ansprüche, worin der dünne Film eine Stärke von 0,03—0,06 μm besitzt.

8. Aufzeichnungsmaterial nach einem der vorhergehenden Ansprüche, worin der dünne Film eine Stärke von 0,03—0,05 μm besitzt.

**Revendications**

1. Un milieu d'enregistrement d'information optique ayant des caractéristiques améliorées de sensibilité à l'enregistrement et à la régéneration et d'aptitude à la conservation qui comprend un substrat transparent ou opaque et une couche d'enregistrement un film mince, formée sur ledit substrat, ladite couche d'enregistrement contenant une matière colorante cyanine, caractérisé en ce que le matière

colorante cyanine est représentée par la formule suivante I:

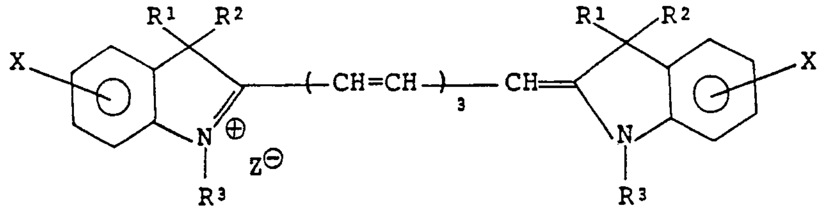

... (I)

dans laquelle $R^1$ et $R^2$ peuvent être identiques ou différents et représentent chacun un groupe alkyle ayant 1—6 atomes de carbone, $R^3$ représente un groupe alkyle ayant 1—3 atomes de carbone, X représente un halogène et Z représente un ion perhalógéné, un ion paratoluènesulfonique ou un ion alkylsulfurique et l'épaisseur de ladite couche d'enregistrement est comprise entre 0,01 et 0,1 µm.

2. Un milieu d'enregistrement selon la revendication 1, selon lequel ladite matière colorante cyanine est celle représentée spécialement par la formule générale II suivante:

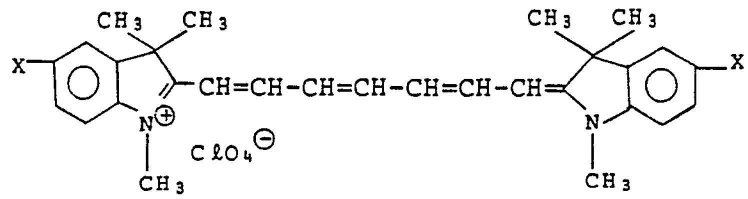

... (II)

(dans laquelle X désigne un atome d'halogène choisi dans le groupe comprenant le fluor, le chlore, le brome et l'iode).

3. Un milieu d'enregistrement selon la revendications 1 ou 2, selon lequel la film mince contenant la matière colorante cyanine contient également un complexe de métal de transition qui est plus absorbant de la lumière à longueur d'onde longue que ladite matière colorante.

4. Un milieu d'enregistrement selon la revendication 3, selon lequel ledit complexe de métal de transition est au moins un élément des composés représentés par la formule générale III suivante:

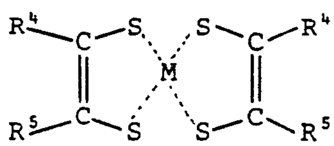

... (III)

(dans laquelle M est un métal de transition choisi parmi le nickel, le platine et la palladium, et $R^4$ et $R^5$ peuvent être identiques ou différents et représentent chacun un groupe alkyle, un groupe phényle, un groupe phényle à substitution alkyle, un groupe phényle à substitution alcoxy ou un groupe dialkylamino-phényle ou bien $R^4$ et $R^5$ peuvent coopérer l'un avec l'autre pour former un noyau).

5. Un milieu d'enregistrement selon la revendication 3 ou 4, selon lequel le rapport de mélange de la matière colorante cyanine au complexe de métal de transition est de 100 parties en poids (du premier); 3—60 parties en poids (du dernier).

6. Un milieu d'enregistrement selon l'une quelconque des revendications précédentes, selon lequel ledit film mince est formé par revêtement.

7. Un milieu d'enregistrement selon l'une quelconque des revendications précédentes, selon lequel ledit film mince a une épaisseur de 0,03—0,06 µm.

8. Un milieu d'enregistrement selon l'une quelconque des revendications précédentes, selon lequel ledit film mince a une épaisseur de 0,03—0,05 µm.